# EUROPEAN PATENT APPLICATION

(11) **EP 4 749 340 A1**
(43) Date of publication of application: **27.05.2026**
(21) Application number: 24214512.6
(22) Date of filing: 21.11.2024
(51) Int. Cl.: G02B 6/136

(54) **METHOD OF MANUFACTURING A PHOTONIC INTEGRATED CIRCUIT AND PHOTONIC INTEGRATED CIRCUIT**

(71) Applicant: Universität Heidelberg, 69117 Heidelberg (DE)
(72) Inventor: PERNICE, Wolfram, 69117 Heidelberg (DE); BANKWITZ, Julian Rasmus, 69117 Heidelberg (DE); SCHULTZEN, Philipp, 69117 Heidelberg (DE); MEYER-HERMANN, Klara Maria, 69198 Schriesheim (DE)
(74) Representative: Vossius & Partner Patentanwälte Rechtsanwälte mbB

(57) **Abstract**

The invention relates to a method of manufacturing a photonic integrated circuit, comprising: providing a wafer comprising a first layer (S1); coating the first layer with a soft resist (S2); patterning a pattern for one or more photonic components on the soft resist (S4); and dry etching the one or more photonic components in the first layer (S6).

## Description

The invention relates to a method of manufacturing a photonic integrated circuit (PIC) and to a photonic integrated circuit.

Photonic integrated circuits (PICs) enable compact, packaged devices for light control and manipulation. However, applications such as neutral atom quantum computing or nonlinear optics (e.g. frequency tripling) require patterned PICs in UV transparent materials. State of the art PICs made from Si, SiN, LNOI and InP all lack transparency below 400nm wavelength, hence are not suitable for the above-mentioned applications.

Gundogdu, Sinan & Pazzagli, Sofia & Pregnolato, Tommaso & Kolbe, Tim & Hagedorn, Sylvia & Weyers, Markus & Schröder, Tim. (2024). AIGaN/AIN heterostructures: an emerging platform for nonlinear integrated photonics. 10.21203/rs.3.rs-4323148/v1, describe Aluminum Gallium Nitride (AlGaN) on Aluminum Nitride (AIN) as a platform for developing reconfigurable and nonlinear on-chip optical systems. In the fabrication process of waveguides and ring resonators a 200 nm thick SiO2 layer is initially deposited using Plasma Enhanced Chemical Vapor Deposition (PECVD) to serve as a hard mask. A 10 nm thick Ti layer is then coated via e-beam evaporation to act as a charge dissipation layer, followed by 400 nm ZEP 520A e-beam lithography resist. After patterning the resist, the pattern is transferred to the hard mask using a two-step reactive ion etching (RIE) process: SF6 plasma is utilized to etch Ti and CF4 plasma is utilized to etch SiO2. In the final etching step, the AlGaN layer is processed using BCl3:Cl2:He at a ratio of 10:50:10 sccm, under 600 W ICP power and 254 100 W RF power, at a pressure of 1 Pa.

It is an object of the invention to provide a PIC suited, e.g., for applications in the UV wavelength, e.g.., for quantum computing and/or nonlinear optics applications. A further object of the invention is to provide an improved method of manufacturing a PIC. In particular, it is an object to provide a more efficient method of manufacturing a PIC. In particular, it is an object to reduce time and/or costs associated with the manufacturing method and/or to increase fabrication yield.

These objects are solved by the method and the PIC according to the independent claims. The invention is set out in the independent claims. Further embodiments of the invention are set out in the dependent claims, the below description, and the drawings. Unless stated otherwise, all aspects, embodiments and features disclosed in the following and shown in the drawings are aspects, embodiments and features of the invention, respectively.

A first aspect of the invention relates to a method of manufacturing a photonic integrated circuit, comprising providing a wafer comprising a first layer; coating the first layer with a soft resist; patterning a pattern for one or more photonic components on the soft resist; and dry etching the one or more photonic components in the first layer.

A PIC is a microchip containing one or more photonic components that form a functioning optical circuit. PICs provide functions for information signals imposed on optical wavelengths. Preferably, the wavelengths are between 10 nm and 1 mm. More preferably, the wavelengths are in the UV range (i.e., between 10 nm and 400 nm), even more preferably between 200 nm and 400 nm. However, other wavelengths are possible. A PIC may be formed from a waveguide that is provided on a substrate.

The PIC may comprise passive and/or active optical elements, preferably a network of passive and/or active optical elements. For example, the PIC may passive optical elements such as power splitters, optical filters or active optical elements such as lasers or electro-optical modulators. At least some of the optical elements are formed in the waveguide, e.g., by virtue of etching techniques. PICs may have a planar structure. Light may propagate within the PIC in a direction parallel to the plane of the PIC.

In other words, the soft resist provides a mask for etching. In the patterning step, areas are patterned onto the resist. After patterning and, if applicable, after development, the resist is provided only in predetermined areas of the first layer, so that these areas resist etching. The pattern applied in the patterning step preferably defines the one-or more photonic components.

The patterning step may involve exposing areas of the resist to light and/or other radiation, e.g., an electron beam. Exposure of the soft resist to light and/or other radiation such as an electron beam may change solvability of the soft resist. For example, exposure of the soft resist to light and/or other radiation may change the structure of the soft resist. For example, the soft resist may comprise a polymer and exposure of the soft resist may change the polymer structure of the soft resist. The areas of the soft resist that are exposed may become either dissolvable or undissolvable upon exposure. In a potential further developing steps, the exposed or unexposed areas of the soft resist are selectively removed, e.g., by a solvent.

Preferably, the method does not include applying a hard mask such as SiO₂ onto the first layer.

Dry etching refers to removal of material by exposing the material to ions, preferably a plasma of reactive gases that removes portions of the material from the exposed surface. In the present case, material of the first layer is removed by dry etching. Because of the application of a resist, only specified areas of the first layer are exposed, so that after dry etching, predetermined structures of the first layer remain. These predetermined structures preferably form one or more photonic components.

Since the method involves the use of a soft resist, the soft resist can be spun directly onto the first layer. Furthermore, since the method does not involve applying a hard mask onto the first layer, it is not necessary to apply further etching steps necessary to etch the PIC.

Because the method involves the use of a soft resist and does not involve a hard mask, the method involves less manufacturing steps. For example, because of the use of a soft resist, the method does not involve an additional etching step for providing the hard mask with the predetermined pattern. Therefore, the method is less time-consuming and/or less cost-consuming. Moreover, the fabrication yield and scalability may be improved. Additionally, removal of the hard mask becomes obsolete, further reducing the fabrication time.

Preferably, the method further comprises developing the soft resist after patterning and before dry etching the one or more photonic components in the first layer.

Developing may comprise selectively removing predetermined areas from the soft resist. The areas of the soft resist to be selectively removed are determined in the patterning step. For example, in the patterning step, predetermined areas of the soft resist may be exposed to light or other radiation, e.g., an electron beam. This exposure may change to solvability of the resist. For example, exposure of selected areas of the soft resist may make these areas dissolvable. In this case, the resist is called a positive resist. Alternatively, exposure of selected areas of the soft resist may make these areas undissolvable. In this case, the resist is called a negative resist.

The predetermined areas may be selectively removed from the resist by means of a solvent, e.g., by immersing the wafer in a solvent.

Preferably, the soft resist comprises a polymer.

Patterning of the soft resist may involve exposing the soft resist to light and/or other radiation, e.g., an electron beam. This exposure may change the polymer structure of the soft resist, which affects to solvability of the polymer. Exposure of the selected areas of the soft resist may increase or decrease the solvability of the soft resist.

Preferably the pattern is patterned on the soft resist by electron beam lithography or optical lithography.

In electron beam lithography, predetermined areas of the soft resist are exposed to an electron beam. In optical lithography, predetermined areas of the soft resist are exposed to light.

Preferably, dry etching is performed by reactive ion etching (RIE) and/or by inductively coupled plasma reactive ion etching (ICP RIE).

RIE is a type of dry etching that uses chemically reactive plasma to remove material deposited on wafers. The plasma may be generated under low pressure (vacuum) by an electromagnetic field which ionizes a gas. High-energy ions from the plasma may attack the areas of the first layer that are not covered by the soft resist with the first layer at these areas.

Preferably dry etching comprises exposing the wafer to a gas or a mixture of gases.

The gas and/or mixture of gases may be ionized to form a plasma. In other words, dry etching comprises exposing the wafer to a plasma created from a gas or a mixture of gases.

Preferably, the gas or mixture of gases comprises a gas suited to chemically bond with Al and/or a gas suited to chemically bond with Ga.

Preferably, the gas or mixture of gases comprises a gas having compounds suited to bind oxygen.

If oxygen atoms are released, e.g., from the soft resist during the etching process, these oxygen atoms could react with aluminum (Al) or gallium (Ga) atoms of the first layer to form a passivation layer, which may slow down the etching process. If the gas or mixture of gases comprises a gas having compounds suited to bind oxygen, such oxygen atoms released during the etching process can be bound by the gas, so that reactions of the Al or Ga atoms of the first layer with oxygen atoms and the formation of a passivation layer are reduced.

Preferably, the gas or mixture of gases comprises silicon tetrachloride or tetrachlorosilane (SiCl₄) and/or chlorine (Cl₂), preferably SiCl₄ and Cl₂.

SiCl₄ and Cl₂ are both suited to chemically bond with Al and Ga atoms to etch the first layer. Furthermore, SiCl₄ may be suited to bind oxygen atoms released during the etching process. Additionally, SiCl⁺ ions can remove any oxides that do form, ensuring a clean etching process.

Preferably, the gas or mixture of gases comprises a noble gas, preferably a noble gas that is heavier than helium (He), more preferably argon (Ar).

The use of a noble gas that is heavier than He, preferably Ar, may make the etching process more anisotropic. During etching, ions of the noble gas, preferably Ar ions, may impact on the surface of the first layer, assisting in material removal through physical sputtering. Because of their heavier mass, atoms of Ar or other noble gas heavier than He have a greater impact on the first layer. As such, the use of a noble gas heavier than He, preferably of Ar, may accelerate the etching process. This may help mitigating the shorter lifetime of the soft resist.

Preferably, the mixture of gases comprises SiCl₄, Cl₂ and Ar.

Preferably, dry edging comprises adjusting ICP power and/or RIE power. Preferably, the ICP power and/or RIE power are adjusted to balance an etch rate of the resist with an edge rate of the material of the first layer, e.g., AlGaN.

The ICP power primarily serves to generate a high-density plasma, which enhances ionization and improves etch uniformity across the wafer. In contrast, the RIE power controls the energy of the ions directed toward the substrate, impacting the anisotropy and precision of the etching process.

Dry edging may comprise balancing ICP power and/or RIE power to balance the etch rates of the soft resist and the material of the first layer, e.g., AlGaN, to ensure accurate pattern transfer to the first layer without over-etching the soft resist or damaging the underlying structures. Specific ranges for ICP and RIE power may vary depending on the equipment and device specifications and may be determined experimentally. The ICP power typically ranges from 400 W to 1200 W, while the RIE power can range from 50 W to 500 W, though these values are adaptable based on the etching system in use.

Preferably, the method further comprises curing the soft resist after coating the first layer with the soft resist and before patterning the soft resist.

Preferably, the soft resist is cured at a temperature between 100°C and 200°C and/or for a time period of between 1 minute and 20 minutes, preferably at 100°C for 2 minutes.

Preferably, the method further comprises removing the soft resist after dry etching the one or more photonic components.

Preferably, the soft resist is removed using wet chemistry, preferably a solvent, more preferably acetone, even more preferably using AR 600-71.

Preferably, the method further comprises cleaning the wafer after dry etching and/or after removing the soft resist.

Preferably, the wafer is cleaned using O₂ plasma, preferably in a reactive ion etcher. The O₂ plasma can also be used to remove the soft resist. That is, if the method comprises the cleaning step, the method may not require a separate step of removing the soft resist. Furthermore, the O₂ plasma may remove not only the resist but also other organic contaminations. For example, the wafer may be subjected to an O₂ plasma for about 30 minutes.

O₂ plasma may be highly effective in breaking down and removing organic materials, making it ideal for stripping photoresist layers used in lithography. It may be understood that the plasma generates reactive oxygen species, such as atomic oxygen and oxygen radicals, which react with the organic components of the resist, converting them into volatile byproducts like CO₂ and H₂O that are easily evacuated from the chamber.

An advantage of using O₂ plasma for resist removal is its selectivity and non-damaging nature. It efficiently removes resist without significantly affecting underlying materials, particularly those used in compound semiconductors such as AlGaN, GaN, and other sensitive materials. Additionally, O₂ plasma cleaning provides a residue-free surface, which is critical for ensuring adhesion and cleanliness in possible subsequent processing steps.

Preferably, the method comprises removing the soft resist after dry etching the one or more photonic component with wet chemistry as well as cleaning the wafer with an O₂ plasma after cleaning.

In this way, the soft resist may be pre-removed with the wet chemistry, so that the wafer can be subjected to the O₂ plasma for a substantially smaller amount of time. For example, in this case, wafer may be subjected to wet chemistry for about 5 to 10 minutes and may then be subjected to O₂ plasma for about 5 to 10 minutes. In this way, the time required for removing the soft resist and cleaning the wafer may be effectively reduced.

Preferably, the method further comprises annealing the wafer after dry etching the one or more photonic components and/or after removing the soft resist and/or after cleaning the wafer.

A purpose of annealing after dry etching (in particular, ICP-RIE) is to repair any damage caused by the ion bombardment and plasma exposure during the dry etching process. In particular, ICP-RIE can introduce surface defects, such as lattice distortion, dislocations, or strain in the etched layers, which can degrade the electrical and optical performance of the device. Annealing helps to relieve this damage by promoting atomic rearrangement and recrystallization, restoring the crystal structure, and improving the material's electrical characteristics.

Preferably, annealing is performed in an oven under inert atmosphere, oxygen atmosphere, or ambient atmosphere.

Preferably, the wafer is annealed at a temperature of 200°C to 1200°C and/or for a time period between 1h and 10h.

Preferably, the first layer comprises Aluminum Gallium Nitride (AlGaN).

AlGaN is capable of transmitting light with ultraviolet (UV) wavelengths, in particular light with a wavelength between 200nm and 400nm.

Preferably, the first layer is made from, more preferably consists of AlGaN.

Preferably, the wafer further comprises a substrate.

Preferably, the substrate comprises, preferably consists of, sapphire.

Preferably, the wafer further comprises a second layer comprising Aluminum Nitride (AIN), preferably made from, more preferably consisting of AIN.

Preferably, the second layer is disposed on the substrate, more preferably the second layer is disposed directly on the substrate.

Preferably, the first layer is disposed on the second layer, more preferably the first layer is disposed directly on the second layer.

Preferably, the second layer has a thickness of at least 100 nm.

The thickness may be measured in a direction perpendicular to a plane of the wafer. In other words, the wafer may have a length, a width and a thickness, wherein the length and the width are measured parallel to a plane defined by the planar structure of the wafer and the thickness is measured in a direction transverse to said plane. The length and the width of the wafer may be greater, preferably substantially greater than the thickness of the wafer.

Several techniques are available for measuring the thickness of wafer layers, each suited to different materials and precision requirements.

Ellipsometry is commonly used because of its non-destructive nature and high sensitivity. It measures changes in the polarization of light reflected from the wafer surface and is particularly effective for thin, transparent, or dielectric films. The technique can accurately measure layer thicknesses ranging from 1 nanometer to several micrometers, making it ideal for pre-characterization of unetched wafers.

X-ray Reflectometry (XRR) is another non-destructive method that examines interference patterns produced by X-rays reflecting off different wafer layers. XRR is highly effective for very thin films, with a measurement range between 0.5 and 100 nanometers. This method is especially useful for multi-layer structures where precise thickness control is essential, making it well-suited for determining the remaining thickness of AlGaN films after etching.

Spectroscopic Reflectometry analyzes the light spectrum reflected from the wafer and compares it to theoretical models to measure the thickness of transparent or semitransparent layers. This method can measure thicknesses ranging from 10 nanometers to a few micrometers, depending on the material's optical properties. Due to its rapid speed-typically completing measurements in under one second-this technique is often used to monitor AlGaN thickness during the etching process, providing a rough estimate of the etch rate in real time.

Transmission Electron Microscopy (TEM) provides the highest resolution of all the techniques, offering sub-nanometer precision. TEM passes a beam of electrons through a thin section of the wafer, producing high-resolution images of the internal structure of the layers. It can measure thicknesses from 0.1 nanometers to around 200 nanometers, making it ideal for analyzing ultra-thin films and complex multi-layer structures. Although TEM is a destructive technique, requiring the sample to be thinned, it is invaluable in advanced research and development, where atomic-scale analysis is crucial. Because of its unparalleled precision, TEM is used to obtain detailed measurements of the AlGaN layer remaining after etching. However, due to its destructive nature, not every fabricated PIC will undergo TEM analysis. Instead, the etch process may be fine-tuned based on initial TEM measurements, and the stability of the process may be monitored on a set schedule - preferably once a week - to ensure consistency over multiple runs.

Preferably, the thickness of the second layer is measured using ellipsometry.

A further aspect relates to a PIC produced by the method described herein. Further features, explanations and advantages provided with respect to the method apply also to the corresponding PIC.

A further aspect relates to a PIC, preferably the PIC produced by the method described herein, comprising a first layer, the first layer comprising AlGaN, the first layer preferably made from, more preferably consisting of AlGaN, and wherein the first layer comprises one or more photonic components.

Preferably, the PIC comprises a second layer, the second layer comprising AIN, the second layer preferably made from, more preferably consisting of AIN, wherein the first layer is disposed on the second layer, preferably the first layer is disposed directly on the second layer.

Preferably, the second layer has a thickness of at least 100nm.

Because the second layer has a thickness of at least 100nm, crystal defects at the interface between the second layer and the substrate do not extend up to the first layer. As such, light transmission losses in the first layer are minimized.

Preferably, the PIC further comprises a substrate.

Preferably, the second layer is disposed on the substrate, preferably the second layer is disposed directly on the substrate.

Preferably, the substrate comprises, preferably consists of, sapphire.

A further aspect relates to a quantum computer comprising the PIC described herein.

A further aspect relates to a neuromorphic computer comprising the PIC described herein.

Preferred embodiments of the present invention are further elucidated below with reference to the drawings.
Fig. 1 shows a flowchart relating to a method according to an exemplary embodiment.
Fig. 2 shows a PIC according to an exemplary embodiment.
Fig. 3 shows an exemplary pattern provided on a PIC according to an exemplary embodiment.
Figs. 4 to 8 show components of PICs fabricated according to exemplary embodiments.

The method comprises the step S1 of providing a wafer comprising a first layer, the first layer comprising AlGaN.

After step 1, the method comprises the step 2 of coating the first layer with a soft resist. The soft resist may be a polymer.

Subsequently, the method may comprise the step S3 of curing the soft resist. For example, the soft resist is cured at a temperature between 100°C and 200°C and/or for a time period of between 1 minute and 20 minutes, preferably at 100°C for 2 minutes.

After curing, the method comprises the step S4 of patterning the soft resist. The pattern may be patterned on the soft resist by electron beam lithography or optical lithography.

After the patterning step S4, the method comprises the step S5 of developing the soft resist. In the developing step S5, exposed or unexposed areas of the soft resist created in the patterning step S4 may be selectively removed, e.g., by a solvent.

Subsequently, the method comprises the step S6 of dry etching the one or more photonic components in the first layer. During dry etching, the portions of the first layer that are not covered by the soft resist are exposed to ions, preferably to a plasma of reactive gases that removes portions of the first layer from the exposed surface. The structures of the first layer that remain may form one or more photonic components.

Afterwards, the method may comprise the step S7 of removing the soft resist, for example using wet chemistry, preferably a solvent, more preferably acetone, even more preferably using AR 600-71.

As a next step S8, the method may comprise cleaning the wafer. For example, the wafer is cleaned using O₂ plasma. For example, the wafer is cleaned in a reactive ion etcher.

Finally, the method may comprise the step S9 of annealing the wafer. Annealing may be performed in an oven under inert atmosphere, oxygen atmosphere, or ambient atmosphere. For example, the wafer is annealed at a temperature of 200°C to 600°C and/or for a time period between 1h and 10h.

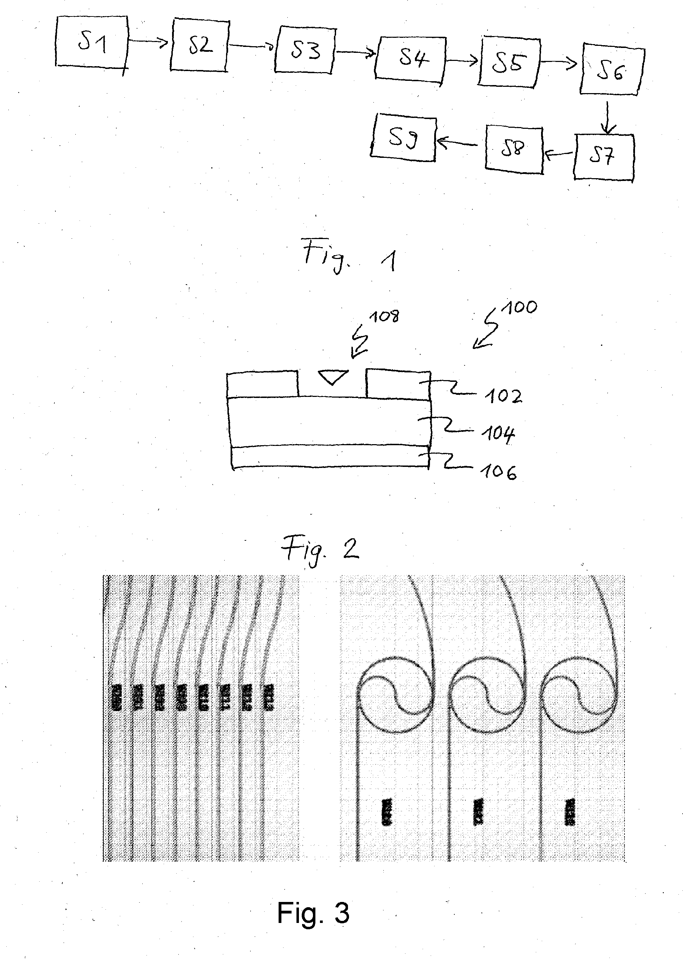

Fig. 2 shows a PIC 100 according to an exemplary embodiment. The PIC 100 may be manufactured by a method as disclosed herein.

The PIC 100 comprises a substrate 106, which may comprise or consist of sapphire. Furthermore, the PIC 100 comprises a second layer 104 comprising or consisting of AIN. The second layer 104 is disposed directly on the substrate 106. The second layer has a thickness of at least 100 nm. The PIC 100 further comprises a first layer 102 comprising or consisting of AlGaN. The first layer 102 is disposed directly on the second layer 104. Furthermore, the first layer 102 comprises one or more structures 108 defining one or more photonic components. The one or more structures 108 may be formed in the first layer 102 by a method as disclosed herein.

### Example:

A raw wafer was obtained from Ferdinand-Braun-Institut Berlin. The raw wafer comprised a substrate made from sapphire, a second layer made from AIN disposed on the substrate and a first layer made from AlGaN disposed on the second layer. The substrate had a thickness of 430µm, the second layer a thickness of 1000nm and the first layer a thickness of 200nm. The thicknesses were measured with an Ellipsometer (J.A. Woollam M-2000).

The wafer was coated with a 300nm layer of the positive soft electron beam resist E-Beam Resist AR-P 6200-Serie (CSAR 62) from Allresist GmbH with a concentration of 9%. After curing the resist for 60s at 150°C on Präzitherm hotplate by Harry Gestigkeit GmbH, a conductive layer of Espacer 300Z charge dissipating agent from Resonac Asia Pacific Pte. Ltd. was added with a three-step spin coating process: 5s of 500rpm, 5s of 2500rpm and 60s of 600rpm to achieve a thin but homogeneous conductive cover layer.

Subsequently, a pattern was provided on the soft resist with an electron beam. That is, selected areas of the resist were exposed to an electron beam pattern generator, a JBX-5500 from Jeol Ltd., with 50kV acceleration voltage and 120µC/cm² beam dose. A Proximity effect correction (PEC) was applied on the dose to compensate for pattern density inhomogeneity. An exemplary pattern in shown in Fig. 3. Fig. 3 shows waveguides of different width (left) and length (right). Such waveguides can be used for characterizing the passive UV optics of the PIC.

Subsequently the resist was developed. During development, the selected areas of the resist that were exposed to the electron beam were removed by dipping in dedicated developer AR 600-548, by Allresist GmbH. The development process takes 60s in pure AR 600-548 cooled to 0°C and is stopped by a 30s bath in isopropanol.

An optional resist reflow can be applied to smoothen resist etches and therefore enhancing the quality of the pattern transferred to the sample during etching. The reflow is performed by baking the patterned sample on the same hotplate as before for 1 min at 130°C.

As a next step, structures were etched into the first layer in an inductively coupled plasma reactive ion etcher (ICP-RIE), model Plasmalab 100 ICP by Oxford Instruments plc. A mixture of gases consisting essentially of SiCl4, Cl2, and Ar with a flow of 2 sccm:5 sccm: 2s ccm at a pressure of 2 mTorr was used. ICP power was 350W and RIE power was 40W. The table temperature of the etching chamber was set to 20°C with an He backside pressure of 5mTorr. The etching time is 80s to obtain an etching depth of 180nm.

After etching, the remaining resist was removed using the dedicated Remover AR 600-71, The remover is cleaned by sonication for 60s each in acetone and isopropanol, then blow drying with N₂.

Furthermore, the wafer was cleaned in the same ICP machine with an O₂ plasma (O₂ flow: 40 sccm, pressure: 5 mTorr, RIE power: 150W).

Annealing of the sample can be performed to improve propagation loss. This happens by baking the sample in inert atmosphere at 400°C for 2h. The rate to heat up and cool down the furnace is 100K/h. This process supplies energy to the crystal lattice of the sample, thus enabling defects to be cured by crystal rearrangement.

Between all the processes, a quick dust removal of the chip surface can be applied, if necessary, by rinsing an appropriate amount of Acetone over the chips, followed by a rinse of Isopropanol and N2 blow drying.

The fabricated sample includes several passive optical components essential for guiding and manipulating light. These components comprise of edge couplers, which couple light from a focused laser beam into the facet of a waveguide terminating at the edge of the fabricated sample. Waveguide S-bends demonstrate the capability to guide light around curves, enabling the creation of complex two-dimensional patterns. Spirals/Delay-lines are incorporated to introduce optical delay between waveguides, effectively enabling optical interference. Additionally, multimode interferometers (MMIs) are used to split light from a single waveguide into multiple waveguides with minimal insertion loss. These passive structures are integral to the PIC design but do not allow active control of the circuit (such as electrical or thermal modulation of individual waveguides).

An advantage of using a soft resist in this fabrication method lies in the significant reduction of fabrication time. Unlike traditional methods that require the pre-patterning of hard masks, which must be sputtered onto the sample as an initial step, this approach eliminates those steps. By omitting hard mask sputtering and etching, the process not only speeds up fabrication but also reduces machine time, which is typically the primary driver of production costs. As a result, this method can reduce fabrication costs by approximately 30%, making it a highly efficient and cost-effective approach to manufacturing PICs. Additionally, since soft resist does not involve hard mask layers, there is less potential for contamination or unwanted residues from sputtering and etching of hard mask materials. This results in cleaner pattern transfer and less risk of defects that could affect optical performance.

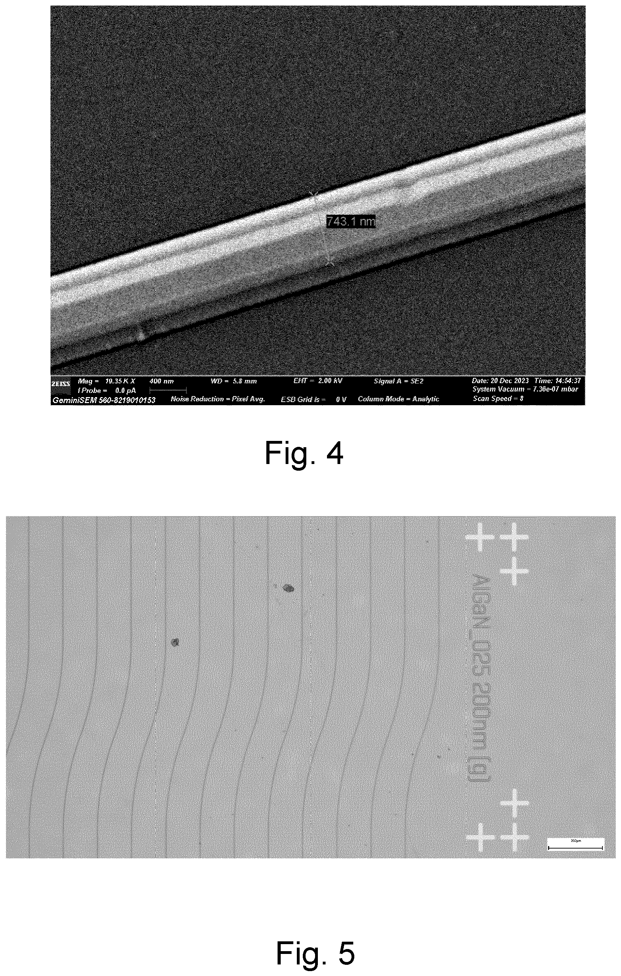

Figures 4 to 8 show components of a PIC fabricated according to the example. They can showcase a variety of passive components that we are able to fabricate according to the example. The list is not complete as such. Other components are also possible.

Fig. 4 shows a delay line. A waveguide delay line in the context of PICs is a key structural and functional element designed to manipulate the timing of light propagation by introducing a controlled delay. These structures are suited for demonstrating that waveguides can guide light over extended paths while maintaining low loss, stable mode confinement, and predictable phase evolution.

Features and Description:
1. Demonstration of Waveguiding Feasibility:
   - Waveguide delay lines are structures suited to demonstrate that light can be guided effectively over long paths with precise control over propagation speed and phase.
   - By including delay lines in a PIC design, the capability to sustain light propagation with minimal loss and distortion over varying lengths can be validated.
2. Controlled Delay:
   - The delay line introduces a temporal delay in the propagation of light by increasing the physical length of the waveguide.
   - This delay can be used in applications such as phase modulation, signal synchronization, and optical buffering.
3. Geometric Design:
   - Delay lines can be implemented as straight, meandered, or spiral waveguides to achieve compactness while maintaining the desired length.
   - The waveguide width, height, and curvature can be optimized to minimize propagation loss and ensure single-mode operation.
4. Fabrication:
   - Delay lines can be used to test the material's ability to support low-loss light propagation over extended distances, making them a feature for evaluating waveguide performance.
5. Low-Loss Operation:
   - Delay lines can be designed with precise waveguide geometries to minimize optical losses such as absorption, scattering, and coupling loss at bends or interfaces.
   - They can serve as benchmarks for determining the minimum propagation loss achievable in a given material and fabrication process.
6. Validation Tool:
   - Incorporating delay lines in a PIC design can be used to validate the manufacturability and performance of waveguides under extended propagation conditions.
   - They can be structures for testing phase stability, insertion loss, and propagation delay across various waveguide designs and materials.
7. Applications:
   - Delay lines can be used for time-domain signal processing, optical interferometry, pulse shaping, and quantum computing.
   - They can be used to synchronize signals, delay optical pulses, or match optical path lengths in devices such as Mach-Zehnder interferometers and optical phased arrays.
8. Design Versatility:
   - The length, shape, and layout of delay lines can be customized for specific applications, allowing for integration in various PIC configurations.
9. Standard Benchmark:
   - Delay lines can serve as a baseline demonstration for PIC design, proving the viability of guiding light through waveguides with minimal loss and distortion.
   - They can be used to confirm the ability to control the temporal characteristics of light in integrated photonics, showcasing waveguides' capability beyond simple point-to-point transmission.
   - By incorporating waveguide delay lines as structures, PICs can demonstrate their capacity for precise light control over extended paths, forming the basis for numerous high-performance optical and quantum applications. These delay lines can both be practical elements and benchmarks for validating waveguide design and fabrication.

Fig. 5 shows S-bends. An S-bend in the context of PICs is a waveguide structure that can be used to demonstrate the feasibility and functionality of bending light paths within a PIC. It can serve both as a practical design element and as an example to show that waveguide bends can be implemented with controlled optical performance.

Features and Description:
1. Demonstration of Waveguide Bending: S-bends can illustrate and validate that bends in waveguides are possible. They can provide a benchmark for testing the performance and limitations of waveguides under bending conditions, including the minimization of loss and distortion during light propagation.
2. Geometric Profile:
   - The S-bend comprises of a smooth, continuous curve, often described by sinusoidal, polynomial, or other mathematical functions.
   - The curve transitions laterally or vertically over a specific distance to shift the optical waveguide path without abrupt changes.
3. Feasibility in Photonic Design:
   - The S-bend can demonstrate that waveguide designs can accommodate bends with minimal loss and effective mode confinement.
   - Its use can underscore the ability to route light efficiently in densely packed circuits, proving that waveguides are not constrained to linear paths.
4. Low-Loss Performance:
   - The bend radius can be optimized to minimize optical losses, such as radiation and scattering, which are common in sharply curved waveguides.
   - The adiabatic transition of the optical mode along the S-bend can ensure minimal distortion and can reduce coupling into higher-order or undesired modes.
5. Validation Tool:
   - By including S-bends as a design element, it is possible to test material properties, fabrication tolerances, and waveguide performance under varying curvature and bending conditions.
6. Practical Applications:
   - S-bends enable spatial routing of light in complex PIC layouts, particularly in components such as splitters, combiners, multiplexers, and modulators.
   - They help optimize device footprint while maintaining robust optical performance.
7. Fabrication Considerations:
   - The inclusion of S-bends in a PIC layout often serves as a test structure during the development phase to assess the bending capabilities of the chosen material and waveguide geometry.
   - By integrating S-bends as a design, PICs can showcase their ability to handle non-linear optical routing while ensuring efficient and reliable operation. This can establish S-bends not only as a practical design choice but also as a demonstration of waveguide flexibility in integrated photonic systems.

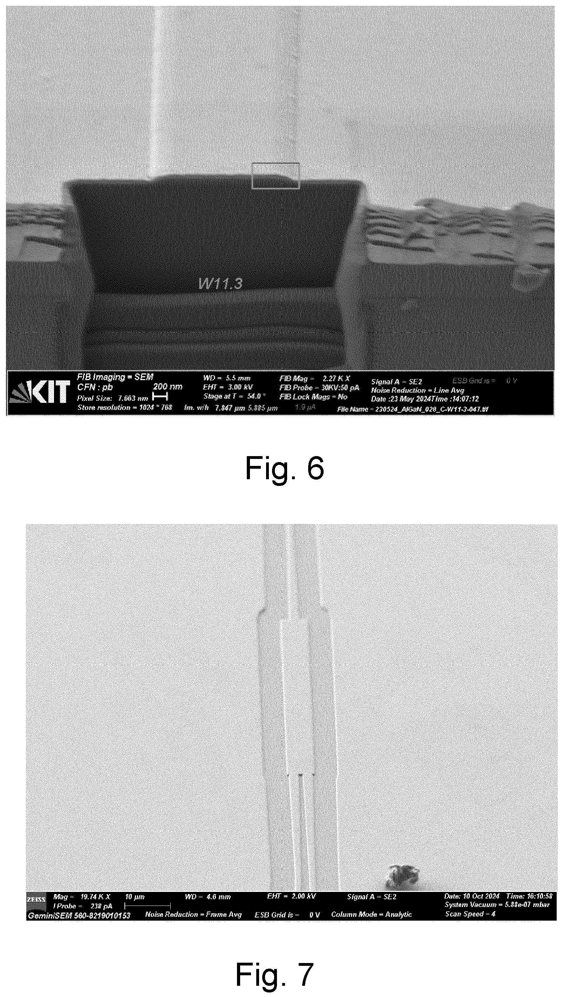

Fig. 6 shows a facet. Butt-coupling facets in PICs are specifically engineered interfaces at the ends of waveguides, designed to facilitate the efficient coupling of light between the PIC and external optical components such as optical fibers, free-space optics, or other PICs. These facets can be used to demonstrate that optical coupling into and out of a waveguide is possible while maintaining minimal insertion loss and high alignment tolerance.

Features and Description:
1. Demonstration of Coupling Feasibility:
   - Butt-coupling facets are design elements that can be used to demonstrate the practicality of coupling light between a PIC and external components. They can be used to validate the ability of the waveguide to efficiently accept or emit light at its boundary.
2. Facet Geometry:
   - The facets are typically perpendicular to the waveguide propagation direction to maximize coupling efficiency.
   - They may include anti-reflective coatings or optimized facet shaping (e.g., angled facets) to reduce reflection and mode mismatch.
3. Mode Matching:
   - The waveguide dimensions and refractive index profile at the facet can be tailored to match the optical mode of the external component (e.g., an optical fiber's mode field diameter). This can minimize coupling loss and reflection.
4. Low-Loss Design:
   - Butt-coupling facets can be engineered to reduce Fresnel reflections and scattering loss.
   - They can be a benchmark for assessing the optical coupling efficiency of the PIC and the quality of the fabricated waveguide ends.
5. Fabrication Process:
   - The facets can be defined during the PIC fabrication process, typically through precise cleaving, dicing, milling or etching (in the case of the image it is milled with a focused-ion beam).
   - The quality of the facet surface finish can be relevant for ensuring low scattering loss and efficient coupling.
6. Standard Validation Structure:
   - Butt-coupling facets can serve as standard structures to test the coupling efficiency and alignment tolerances of waveguides. They can be a practical demonstration of the PIC's capability to interface with external optical systems.
7. Integration with External Components:
   - The facets can be often used to interface the PIC with single-mode or multi-mode optical fibers, free-space optics, or other waveguides in hybrid systems.
   - They can provide a physical and optical transition point for integration into larger optical systems.
8. Applications:
   - Common applications include telecommunications, optical sensing, and quantum computing, where efficient light coupling is crucial for overall system performance.
   - Butt-coupling facets can also be used for testing and characterizing waveguide performance during device development and production.
9. Used in PIC Testing:
   - The inclusion of butt-coupling facets in a PIC design can demonstrate that the waveguide can support optical interfacing with minimal coupling loss.
   - They can provide a benchmark for evaluating PIC performance, including insertion loss, mode alignment, and optical efficiency.
10. Optimization Possibilities:
   - Advanced designs may include facet structuring, such as tapering or gratings, to further improve coupling efficiency or broaden the coupling bandwidth.
   - The geometry and surface treatment of the facets can be optimized for specific wavelengths and applications.
   - By incorporating butt-coupling facets as a feature, PICs can demonstrate their capability to interface seamlessly with external optical systems, ensuring efficient light transfer and validating the practical utility of waveguides in integrated photonics. These facets can be used not only for coupling but also for testing and showcasing the feasibility of using PICs in diverse optical applications.

Fig. 7 shows a Multimode Interference Coupler (MMI). A MMI in PICs is a compact optical device that can leverage the self-imaging property of multimode waveguides to split or combine optical signals. MMls can demonstrate light manipulation within a PIC, e.g., to show that light can be split, combined, or distributed with high precision and minimal loss.

Features and Description:
1. Demonstration of Signal Manipulation:
   - MMls are widely recognized as a structure to prove the ability of PICs to manipulate light by splitting or combining optical signals with high uniformity and accuracy.
   - They can showcase the feasibility of multimode waveguides for achieving efficient optical signal processing in an integrated platform.
2. Self-Imaging Principle:
   - MMls can operate based on the self-imaging phenomenon, where an input optical field replicates itself at specific intervals within a multimode waveguide.
   - The geometry of the MMI region can determine the imaging conditions and the number of output ports.
3. Geometric Design:
   - An MMI typically comprises a rectangular or tapered multimode waveguide region with carefully designed input and output waveguides.
   - The dimensions and length of the multimode section can be optimized to achieve specific splitting ratios or mode profiles.
4. Splitting and Combining Functionality:
   - MMls can act as power splitters, combiners, or multiplexers, capable of dividing light into multiple output channels or merging light from multiple input channels.
   - The splitting ratio (e.g., 50:50 or arbitrary ratios) can be determined by the design of the multimode region and the arrangement of the output waveguides.
5. Low-Loss Design:
   - MMls can be designed to minimize insertion loss, imbalance, and crosstalk between output ports.
   - Due to their compact nature they can be highly efficient for integrating splitting or combining functionality into densely packed photonic circuits.
6. Validation Tool:
   - Including MMls in a PIC design can demonstrate the ability of multimode waveguides to handle complex optical operations.
   - They can serve as benchmarks for testing waveguide mode control, power distribution accuracy, and phase stability.
7. Applications:
   - MMls can be components in devices such as optical modulators, switches, interferometers, and phased arrays.
   - They can also be used in wavelength-division multiplexing (WDM) systems and quantum photonic circuits.
8. Fabrication Considerations:
   - Their performance can be influenced by fabrication tolerances, including etching precision and surface roughness.
9. Design Versatility:
   - MMls can be customized to support different numbers of input and output ports (e.g., 1x2, 1x4, 2x2).
   - Variations can include tapered input/output waveguides for enhanced mode matching or tilted ports to reduce reflections.
10. Used in PIC Design:
   - MMls can be components in PIC development, e.g., demonstrating the ability to manipulate light spatially and distribute power accurately within integrated systems.
   - They can be used to validate the robustness and scalability of PIC designs for optical signal routing and processing.
11. Compact and Efficient:
   - The compact footprint of MMls makes them suited for space-constrained photonic circuits, offering a high degree of integration without compromising performance.
   - By incorporating MMls as a standard feature, photonic integrated circuits can demonstrate their capability to split, combine, and manipulate optical signals effectively. MMls are not only practical elements but can also be benchmarks for validating the performance of multimode waveguides in integrated photonic systems.

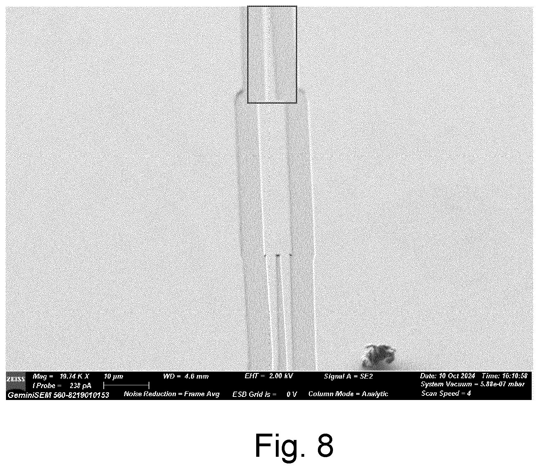

Fig. 8 shows a Spot Size Converter (SSC). An SSC, also known as a taper, is a structure in PICs that can enable efficient mode transformation between optical waveguides of different sizes or between a waveguide and an external optical component such as a fiber. It can be an element for demonstrating that light can transition between components with minimal insertion loss and optimal mode matching, making it suited for validating coupling and mode-shaping capabilities in PICs.

Features and Description:
1. Demonstration of Mode Transformation:
   - Spot size converters can serve as a structure to demonstrate that light can transition between waveguides or optical systems with varying mode field diameters (MFDs).
   - They can be used to validate the ability to bridge the gap between tightly confined waveguide modes and larger external optical modes, such as those in single-mode fibers.
2. Geometric Design:
   - SSCs can typically be implemented as adiabatic tapers, where the waveguide width or height gradually changes over a specific length.
   - The taper design can ensure a smooth mode transition, minimizing mode mismatch and reflection.
3. Mode Matching:
   - The taper geometry can be optimized to achieve high overlap between the waveguide mode and the external mode, maximizing coupling efficiency.
   - This can reduce insertion loss and ensures minimal distortion of the optical signal during mode transition.
4. Low-Loss Coupling:
   - SSCs can be designed to minimize scattering losses and Fresnel reflections, which can occur at abrupt changes in waveguide dimensions.
   - The adiabatic nature of the taper can ensure low-loss performance across a wide wavelength range.
5. Validation Tool:
   - Including SSCs in a PIC design can demonstrate the ability of the waveguide structure to handle mode transformation efficiently.
   - They can serve as a benchmark for testing the coupling efficiency, alignment tolerance, and mode-shaping capabilities of waveguides.
6. Applications:
   - SSCs can be used for coupling light between PICs and optical fibers, free-space optics, or other integrated components.
   - They can be used for hybrid photonic systems that integrate PICs with other optical elements.
7. Fabrication Considerations:
   - Their performance can depend on fabrication tolerances, such as etching precision, waveguide sidewall smoothness, and taper length.
8. Compact Design:
   - The length of the taper can be optimized to balance coupling efficiency and device compactness, with shorter tapers preferred for space-constrained designs.
9. Customizable Configurations:
   - SSCs can be tailored for specific applications, including single-mode and multi-mode transitions or coupling to different fiber types (e.g., SMF-28 or photonic crystal fibers).
   - Variants can include vertical tapers for coupling to free-space optics or 3D tapers for more complex mode transformations.
10. Standard in PIC Design:
   - SSCs can be a feature for validating the interfacing capability of PICs, showcasing their ability to integrate with external optical systems seamlessly.
   - They can also be used for characterizing waveguide performance, such as modal overlap, propagation loss, and alignment sensitivity.
11. Efficient Optical Interfaces:
   By enabling high-efficiency mode transformation, SSCs can improve the overall performance of photonic systems by reducing power loss and increasing signal fidelity.

By incorporating spot size converters as structures, photonic integrated circuits can demonstrate their ability to handle mode transformations and facilitate efficient light coupling between diverse optical components. SSCs can serve as practical tools for coupling and as benchmarks for validating the robustness and versatility of PIC designs. In the structure shown in Fig. 8, a taper is used to couple a higher order mode into the MMI, to increase its efficiency.

Further embodiments of the invention are set out in the following aspects:
1. Method of manufacturing a photonic integrated circuit, comprising:
   providing a wafer comprising a first layer (S1);
   coating the first layer with a soft resist (S2);
   patterning a pattern for one or more photonic components on the soft resist (S4);
   dry etching the one or more photonic components in the first layer (S6).
2. Method of aspect 1, further comprising developing the soft resist (S5) after patterning and before dry etching (S4) the one or more photonic components in the first layer (S6).
3. Method of aspect 1 or 2, wherein the soft resist comprises a polymer.
4. Method of any one of the preceding aspects, wherein the pattern is patterned on the soft resist by electron beam lithography or optical lithography.
5. Method of any one of the preceding aspects, wherein dry etching is performed by reactive ion etching and/or by inductively coupled plasma reactive ion etching.
6. Method of any one of the preceding aspects, wherein dry etching comprises exposing the wafer to a gas or a mixture of gases.
7. Method of aspect 6,
   wherein the gas or mixture of gases comprises a gas suited to chemically bond with Al and/or a gas suited to chemically bond with Ga.
8. Method of aspect 6 or 7, wherein the gas or mixture of gases comprises a gas having compounds suited to bind oxygen.
9. Method of any one of aspects 6 to 8,
   wherein the gas or mixture of gases comprises SiCl₄ and/or Cl₂, preferably SiCl₄ and Cl₂.
10. Method of any one of aspects 6 to 9,
   wherein the gas or mixture of gases comprises a noble gas, preferably a noble gas that is heavier than He, more preferably Ar.
11. Method of aspect 6,
   wherein the mixture of gases comprises SiCl₄, Cl₂ and Ar.
12. Method of any one of the preceding aspects, wherein dry etching comprises adjusting ICP power and/or RIE power.
13. Method of any one of the preceding aspects, further comprising curing the soft resist (S3) after coating the first layer with the soft resist (S2) and before patterning the soft resist (S4).
14. Method of aspect 13, wherein the soft resist is cured at a temperature between 100°C and 200°C and/or for a time period of between 1 minute and 20 minutes, preferably at 100°C for 2 minutes.
15. Method of any one of the preceding aspects, further comprising removing the soft resist (S7) after dry etching the one or more photonic components (S6).
16. Method of aspect 15, wherein the soft resist is removed using wet chemistry, preferably a solvent, more preferably acetone, even more preferably using AR 600-71.
17. Method of any one of the preceding aspects, further comprising cleaning the wafer (S8) after dry etching (S6) or after removing the soft resist (S7).
18. Method of aspect 17, wherein the wafer is cleaned using O₂ plasma, preferably in a reactive ion etcher.
19. Method of any one of the preceding aspects, further comprising annealing the wafer (S9) after dry etching the one or more photonic components (S6) and/or after removing the soft resist (S7) and/or after cleaning the wafer (S8).
20. Method of aspect 19, wherein annealing is performed in an oven under inert atmosphere, oxygen atmosphere, or ambient atmosphere.
21. Method of aspect 20, wherein the wafer is annealed at a temperature of 200°C to 600°C and/or for a time period between 1h and 10h.
22. Method of any one of the preceding aspects,
   wherein the first layer comprises AlGaN, preferably is made from AlGaN, more preferably consists of AlGaN.
23. Method of any one of the preceding aspects,
   wherein the wafer further comprises a substrate.
24. Method of aspect 23,
   wherein the substrate comprises, preferably consists of, sapphire.
25. Method of any one of the preceding aspects,
   wherein the wafer further comprises a second layer comprising AIN, preferably made from, more preferably consisting of AIN;
   wherein the first layer is disposed on the second layer, preferably the first layer is disposed directly on the second layer.
26. Method of aspect 25,
   wherein the second layer has a thickness of at least 100nm.
27. A photonic integrated circuit (100) produced by the method of any one of the preceding aspects.
28. A photonic integrated circuit (100), preferably the photonic integrated circuit of aspect 27, comprising a first layer (102), the first layer (102) comprising AlGaN, the first layer preferably made from, more preferably consisting of AlGaN, and
   wherein the first layer comprises one or more photonic components (108).
29. The photonic integrated circuit (100) of aspect 28, further comprising a second layer (104), the second layer (104) comprising AIN, the second layer (104) preferably made from, more preferably consisting of AIN, wherein the first layer (102) is disposed on the second layer (104), preferably the first layer (102) is disposed directly on the second layer (104).
30. The photonic integrated circuit (100) of aspect 29, wherein the second layer (104) has a thickness of at least 100nm.
31. The photonic integrated circuit (100) of any one of aspects 28 to 30, further comprising a substrate (106).
32. The photonic integrated circuit (100) of aspects 31 and 29, wherein the second layer (104) is disposed on the substrate (106), preferably the second layer (104) is disposed directly on the substrate (106).
33. The photonic integrated circuit (100) of aspect 31 or 32, wherein the substrate (106) comprises, preferably consists of, sapphire.
34. A quantum computer comprising the photonic integrated circuit of any one aspects 27 to 33.
35. A neuromorphic computer comprising the photonic integrated circuit of any one aspects 27 to 33.

## Claims

1. Method of manufacturing a photonic integrated circuit, comprising:
providing a wafer comprising a first layer, the first layer comprising AlGaN (S1);
coating the first layer with a soft resist (S2);
patterning a pattern for one or more photonic components on the soft resist (S4); and
dry etching the one or more photonic components in the first layer (S6).

2. Method of claim 1, further comprising developing the soft resist (S5) after patterning and before dry etching (S4) the one or more photonic components in the first layer (S6).

3. Method of any one of the preceding claims, wherein the pattern is patterned on the soft resist by electron beam lithography or optical lithography.

4. Method of any one of the preceding claims, wherein dry etching is performed by reactive ion etching and/or by inductively coupled plasma reactive ion etching.

5. Method of any one of the preceding claims, wherein dry etching comprises exposing the wafer to a gas or a mixture of gases; and
wherein the gas or mixture of gases comprises a gas suited to chemically bond with Al and/or a gas suited to chemically bond with Ga.

6. Method of claim 5, wherein the gas or mixture of gases comprises a gas having compounds suited to bind oxygen.

7. Method of claim 5 or 6,
wherein the gas or mixture of gases comprises a noble gas, preferably a noble gas that is heavier than He, more preferably Ar.

8. Method of any one of the preceding claims,
wherein the mixture of gases comprises one or more of: SiCl₄, Cl₂ and Ar, preferably the mixture comprises SiCl₄, Cl₂ and Ar.

9. Method of any one of the preceding claims, wherein dry etching comprises adjusting ICP power and/or RIE power.

10. Method of any one of the preceding claims, further comprising curing the soft resist (S3) after coating the first layer with the soft resist (S2) and before patterning the soft resist (S4);
preferably, wherein the soft resist is cured at a temperature between 100°C and 200°C and/or for a time period of between 1 minute and 20 minutes, preferably at 100°C for 2 minutes.

11. Method of any one of the preceding claims, further comprising removing the soft resist (S7) after dry etching the one or more photonic components (S6) and/or cleaning the wafer (S8) after dry etching or after removing the soft resist (S7);
preferably, wherein the soft resist is removed using wet chemistry, preferably a solvent, more preferably acetone, even more preferably using AR 600-71; and
preferably, wherein the wafer is cleaned using O₂ plasma, preferably in a reactive ion etcher.

12. Method of any one of the preceding claims, further comprising annealing the wafer (S9) after dry etching the one or more photonic components (S6) and/or after removing the soft resist (S7) and/or after cleaning the wafer (S8);
preferably, wherein annealing is performed in an oven under inert atmosphere, oxygen atmosphere, or ambient atmosphere.
more preferably, wherein the wafer is annealed at a temperature of 200°C to 600°C and/or for a time period between 1h and 10h.

13. Method of any one of the preceding claims,
wherein the wafer further comprises a substrate;
wherein the substrate comprises, preferably consists of, sapphire.

14. Method of any one of the preceding claims,
wherein the wafer further comprises a second layer comprising AIN, preferably made from, more preferably consisting of AIN;
wherein the first layer is disposed on the second layer, preferably the first layer is disposed directly on the second layer; and
preferably, wherein the second layer has a thickness of at least 100nm.

15. A photonic integrated circuit (100) produced by the method of any one of the preceding claims.
